Europäisches Patentamt

European Patent Office

Office européen des brevets

(11) Publication number: **0 473 859 A1**

# EUROPEAN PATENT APPLICATION

(21) Application number: **90630146.0**

(22) Date of filing: **27.08.90**

(51) Int. Cl.5: **F24J 2/04**, F24J 2/34, F24J 2/40

(43) Date of publication of application:
**11.03.92 Bulletin 92/11**

(84) Designated Contracting States:
**AT BE CH DE DK ES FR GB GR IT LI LU NL SE**

(71) Applicant: **Seidel, Günther**
**132 Route de Luxembourg**
**L-7241 Bereldange(LU)**

(72) Inventor: **Seidel, Günther**
**132 Route de Luxembourg**
**L-7241 Bereldange(LU)**
Inventor: **Urbanek, Andrzej**
**ul. Polna 6**
**05 - 420 Jozefow(PL)**
Inventor: **Kumanowski, Krzysztof**
**Strzeleckiego Street No. 6/41**
**02-767 Warsaw(PL)**

(74) Representative: **Waxweiler, Jean et al**
**OFFICE DENNEMEYER S.à.r.l. P.O. Box 1502**
**L-1015 Luxembourg(LU)**

(54) Wall for radiation absorption and method for absorbing radiations and transferring thermal energy in solar walls.

(57) Wall for solar radiation absorption comprising an external plate (2), a first insulation layer (3) disposed behind the external plate (2), the external plate 2 and the first layer (3) permitting transmission of solar radiations, an absorber element (4) disposed behind the insulation layer (3), a massive wall section (10) arranged at a distance from the absorber element (4), a second insulation layer (8) disposed between the massive wall section (10) and the absorber element (4) such that an intermediate cavity (5) is provided between the second insulation layer (8) and the absorber element (4), a heat transporting fluid for transferring heat to the massive wall section (10), the heat transporting fluid passing through the intermediate cavity (5) and through the massive wall section (10), and passage means (6,14) permitting fluid communication between the intermediate cavity (5) and the massive wall section (10).

Fig. 4a.

The present invention relates to a novel construction of a wall for absorption of the solar radiations. The invention also relates to the media used for the construction of solar wall as well as for the way of installing the wall. Further, this invention is directed to a method for absorbing solar radiation and transferring thermal energy in solar walls.

One of possible ways to use the energy of solar radiation is by providing walls for solar radiation absorption and accumulation in order to release the absorbed energy in a long time period after it was absorbed, e.g. in day-night cycle.

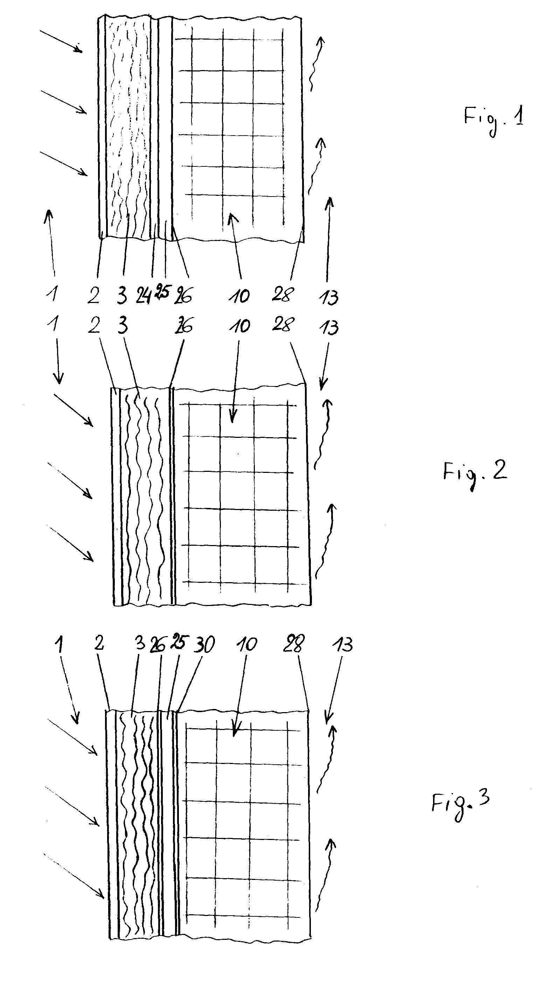

The literature concerning the constructions of solar walls is very wide. There are presented three main types of known constructions of solar wall which are explained in detail hereinafter with reference to figures 1-3. These known solar walls generally comprise an external wall section having an external plate and an insulation layer disposed behind the external plate, an absorber behind the insulation layer, and a massive wall section that can be arranged at a distance from the absorber. The external plate and the insulation layer allow transmission of solar radiations to the absorber.

These known constructions of solar wall have some disadvantages which jeopardise its introduction to the building practice.

The main disadvantage of the known solar walls is due to the low heat storing capacity of materials used for the construction of massive walls. There are usually used ordinary materials as those for building constructions: concrete of different kinds, bricks, etc. These materials have a maximum heat storing capacity of about 2000 $kJ/m3.K$, while for the case of leight-weight materials for wall construction, the heat-capacity can be even less than 500 $kJ/m3K$. Those values of heat storing capacity are not satisfactory for heat storing by massive walls.

The solar walls of known construction manifest relatively high heat transfer properties of an external translucent or transparent insulation layer. Thickness and type of structure of this insulation also influence the solar radiation transmission to the massive wall. Hence, the thickness of this layer and the type of structure of the solar wall has an optimal value according to the transmission of solar radiation as well as of heat transportation. For a translucent granular silica (aerogel) layer of a thickness of about 20 mm, as well as for a 100 mm thick layer of polycarbonate honeycombs or capillaries, the solar radiation transmission is between 55 and 65% while the heat transfer coefficient, so called U-value, is mainly at the level of 1,0 W/m2K.

The high U-values mentioned above are fixed for any types of known construction of solar walls and are very disadvantageous mainly because of the high temperature of an absorber element of the wall. High temperature differences between ambient air and absorber element cause high heat losses during the period of energy accumulation by the wall. Because of the low heat conductivity of the massive walls, the heat transfer to the inside of the wall is slow and the absorber is at high temperature. A high U-value also causes considerable heat losses during the night. This is particularly disadvantageous during the winter, in December and January, when the accumulation period is only of a few hours.

It is therefore an object of the present invention to provide a wall for solar radiation absorption that overcomes the disadvantages mentioned above inherent to the known walls of this type.

Particularly, with respect to the need for a cheap and efficient construction of solar walls, an object of this invention is to provide a solar wall having a heat storing capacity higher than 2000 kJ/kg K, providing a U-value of external insulation of the massive wall much less than 1,0 W/m2K, providing a temperature of the external surface of massive wall nearly equal to the average temperature of the whole massive wall, and preventing the overheating of the massive wall during the summer time.

According to the invention, these objects are achieved by providing a solar wall further comprising a second insulation layer disposed between the massive wall section and the absorber such that an intermediate cavity is provided between the second insulation layer and the absorber, a heat transporting fluid for transferring heat to the massive wall section, said heat transporting fluid passing through the intermediate cavity and through the massive wall section, and passage means permitting fluid communication between the intermediate cavity and the massive wall section.

The above mentioned improvements in solar wall construction provide a higher efficiency of the use of solar energy and also provide easy maintenance and service of the solar wall.

The solar wall according to the present invention does not have the disadvantages mentioned above. It furnishes a better quality in a sense of efficiency of energy recovery and heat storing as well as heat transportation form the absorber to the indoor air.

The wall for the solar radiation absorption according to the present invention can consist of an external transparent plate, having from one side a contact with atmospheric air and from another side being spaced by a translucent thermal insulation from the absorber of solar energy. In a preferred embodiment of the invention a cavity full of liquid is connected with the massive wall by upper and bottom passages passing through the layer of the secondary thermal insulation spacing the cavity from the massive wall section. Both the upper and bottom passages for fluid circulation can be provided with fluid flow control means, preferably fluid temperature controlled valves. The heat transporting fluid of the invention is preferably a liquid having the required heat transfer characteristics, and antifreezing and anticorrosive properties for use in solar walls. Thermal energy can be transferred from the intermediate cavity to the massive wall section by using the natural convective flow of fluid therethrough, thereby providing fluid circulation without employing a pump device for the fluid flow.

The massive wall section of the solar wall according to the present invention is connected with the passage means joining it with the fluid cavity at one side of the solar absorber plate. The massive wall section can comprise channels for the liquid or it can be a vessel covered by a tight cover containing liquid only. The channels for liquid can be incorporated into the traditional building materials.

In the solar wall according to the present invention there are two layers of thermal insulation preventing the heat flow from the massive wall section out to the ambient air. The primary outside insulation is translucent or transparent and separates the solar radiation absorber from the outdoor air.

The secondary insulation layer can be made of an opaque or translucent material to prevent heat losses from the massive wall section to the atmospheric air.

Solar radiation absorber or a part of it only is positioned at the surface of the intermediate cavity in which a liquid circulates through the cavity, passage means as well as through the massive wall section. The circulating liquid is a heat carrier which flows up in the cavity and which flows down in the massive wall section. The liquid flow can be partly restricted or stopped by a flow control device in an upper passage in case the liquid temperature exceeds the required value. A flow control device in a bottom passage can restrict or stop the liquid circulation when the temperature of the liquid is lower than the required value.

Construction of massive wall section being the part of the solar wall according to the present invention is prepared to operate with a liquid agent for transporting heat as well as for heat storing. The liquid can enter the massive wall section through the upper passage. Liquid enters the inside of a vessel full of the same liquid or it flows through the construction of the massive wall section via a specially arranged piping down to the bottom passage through which the liquid enters the lower part of the intermediate cavity at which surface the solar energy is absorbed.

In one embodiment of the invention the part of the massive wall section consists of specially arranged pipes for liquid transportation, of building materials like concrete or bricks and or an external cover of the massive wall section.

The construction of solar wall being the subject of present invention furnishes the U-value of the primary and secondary insulation much lower than 1,0 W/m2 K.

The construction of solar wall according to the present invention has a heat storing capacity much higher than 2000 KJ per 1 kg of massive wall section per 1 kelvin. This feature results from the fluid communication between the intermediate cavity and the massive wall section.

The construction of solar wall being the subject of the present invention gives the opportunity to keep the temperature of the absorber element nearly equal the temperature of the massive wall section as well as to distribute the collected heat uniformly in a whole cross section of the massive wall. This results from the use of the fluid which transports the heat from the absorber to the heat storage in the massive wall section.

The construction of solar wall according to the present invention prevents overheating of massive wall section over the required temperature e.g. 25°C and prevents the rapid cooling down of the massive wall section by transferring heat to the outside atmosphere. This is caused by the second layer of insulation and by the temperature controlled flow control means installed in the passages for the circulating fluid.

A detailed description of the invention follows by reference to the accompanying drawings in which:

Fig. 1. is a cross-sectional view of a known construction of a solar wall with gas gap and absorber on the surface of the massive wall section;

Fig. 2 is a cross-sectional view of a known construction of a solar wall without gas gap, but with an absorber being in contact with a translucent insulation layer as well as with a massive wall section;

Fig. 3. is a cross-sectional view of a known construction of a solar wall with an absorber being adjacent to a gas cavity;

Fig. 4. is a cross-sectional view of a first embodiment of solar wall according to the present invention with a massive wall section full of liquid,

Fig. 4a is a cross-sectional view of a second embodiment of the invention with a sponge structure within the massive wall section,

Fig. 5. is a cross-sectional view of a third embodiment of the present invention with a massive wall section with internal channels for the fluid;

Fig. 5a and b. are cross-sectional views similar to Fig. 5 with the passages for the fluid arranged in form of pipes positioned in two different ways,

Fig. 6. is a cross-sectional view of a further embodiment of the invention with passage means and flow control means externally of the second insulation layer.

A first type of known solar walls presented in Fig. 1 consists of three main parts namely a transparent insulation 3, an intermediate gas space 25 as well as a massive wall section 10 on which an absorption surface is arranged.

The first part of this construction is exposed to the atmospheric air 1. For example thermal insulation 3 can be a structure made of plastic, glass and in form of capillaries, honeycombs, silica aerogel, aerosil or any other materials permitting transmission of solar radiations while being thermal insulating. It is placed between plates 2 and 24 e.g. made of glass, plastic, metal or any material of low solar radiation absorption with high mechanical strength and satisfactory resistance against weather. The internal plate 24 is spaced from the massive wall section 10 by an air gap 25 supporting the insulating properties of the external layer of the solar wall. Solar radiation is absorbed at the external surface 26 of massive wall 10. The surface 26 is advantageously covered with any material such as paints, improving the absorbance of solar radiation. Heat accumulates in the massive wall section 10 made of concrete, bricks or other ceramic material used for wall construction and it is then conducted to the surface 28 which is inside of the building and from which the heat is transferred to the indoor air 13.

A second type of solar wall illustrated in Fig. 2 consists of two parts only, namely a translucent thermal insulation 3 spaced from outside air 1 with a transparent, weather resistant plate 2 and a massive wall section 10.

Solar radiation traverses plate 2, thermal insulation 3 and it is absorbed at external surface 26 of massive wall 10. Solar energy is accumulated in massive wall 10 and then it is transferred to the internal surface 28 of the massive wall section 10 and eventually to the indoor air 13.

It is advantageous to cover the surface 26 of massive wall 10 with a layer of highly absorptive material which is either deposited on the external surface of massive wall section 10 or is deposited on the construction material other than massive wall section e.g. on metal or other high thermal conductivity material which is joined with the massive wall section 10 to ease the heat flow from the absorber 26 to the inside of the massive wall and then to the indoor air 13.

A third type of solar wall illustrated in Fig. 3 is similar to the second type. The only difference is that in the wall according to this type, there is a free space 25 between the element 26 on which solar radiation is absorbed and the external surface 30 of massive wall section 10.

The radiation passes transparent plate 2, translucent insulation 3 and it is absorbed on surface 26. Part of the thermal energy generated at the surface of plate 26 is transferred to the surface 30; however a part of this energy is transferred by fluid, preferably air, to other parts of the device where heat contained in it is used. Part of heat which is transferred from plate 26 to the internal surface 30 of massive wall section 10 and then within the massive wall section is then transferred to the indoor air 13.

As mentioned above these known types of constructions have high U-values and a low heat storing capacity. Also, the high temperature of the absorber in Fig. 1, 2 and 3 causes large temperature differences between ambient air 1 and the absorber 26, and hence high heat losses during the period of accumulation of energy by the wall. High temperature of the absorber 26 is caused by the massive wall sections constructed of a material of low or medium heat conductivity. Therefore, heat flow to the inside of the wall is slow and a temperature of absorber 26 in a range of 40 - 50°C is a normal value obtained during the day.

It is the property of known constructions of solar walls that energy absorbed at the absorber passes slowly to the inside surface 28 of massive wall section 10. There are some cases in which quick transport of accepted solar radiation energy to the indoor air 13 is necessary.

The air gaps, like 25 in Fig. 3 are used for cooling the massive wall section during the summer time. Except for those air gaps, shading devices and reflecting glasses, the known solar walls have no other protection against overheating. Since air gaps and shadow devices need much service, other solutions to avoid overheating of solar walls are essential.

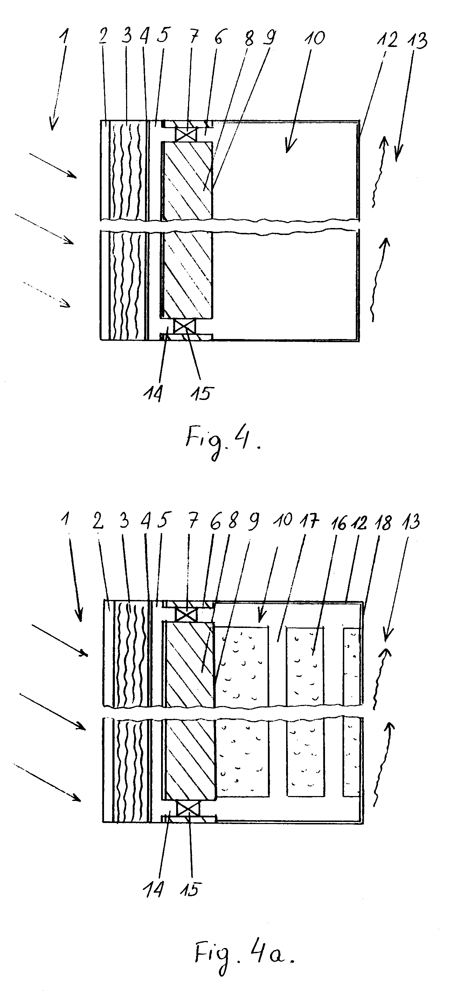

An embodiment of the wall for solar radiation absorption being the subject of present invention is shown in Fig. 4.

The outdoor atmosphere 1 is in contact with external transparent plate 2 made of glass, polymethyl metacrylate or other weather resistant, mechanically strenght, transparent materials of a thickness of few millimeters. The layer of translucent thermal insulation 3 is made of a material which furnishes advantageously the transmittance of solar energy in a range 0,55 - 0.65 and thermal insulation properties for the U-value about 1,0 W/m2K. This thermal insulation layer 3 can be made of granular silica aerogel. For granular silica aerogel the thickness of this layer is about 20 mm while for plastic honeycombs or capillaries it is about 100 mm. The translucent insulation 3 is in contact with an absorber 4 having a surface adjacent liquid cavity 5. Absorber 4 is covered with highly absorptive and slightly emissive media (paints). Absorber 4 wherein the solar radiation is transformed into heat, is made of metal or any other materials of satisfactory heat conductivity. The liquid cavity 5 can have any shape and dimension to keep free convective flow of liquid therethrough. The flow is caused by the heating of liquid by the solar energy taken by the liquid from absorber 4.

Liquid contained in the cavity 5 can consist essentially of water but it can also contains antifreezing and anticorrosive media like inorganic salts, glycerin, glycol or other chemical compounds. The water content in the liquid is more than 80% by weight so that the heat capacity of liquid used for solar wall according to the present invention is from 3500 to 4000 KJ/kg K.

Liquid cavity 5 has two connections with massive wall section 10. The connections can permit to prevent flow of liquid from the cavity 5 and its circulation through the massive wall section. In the embodiment of Fig. 4, the massive wall section is a vessel 10 closed by a cover 12. Because of natural convective flow upwardly in cavity 5 and downwardly in massive wall section 10, there are provided two passages 6,14 to connect cavity 5 with massive wall section 10. The top passage 6 is provided for outflow of hot liquid from channel 5 to the massive wall section. The bottom passage 14 furnishes the channel 5 with cold liquid from the bottom part of the massive wall section. The magnitude of cross section of each of the passages has to prevent free circulation of the liquid. It is recommended to provide 1 cm3 of both of passage's cross section for each 6 dm2 of the surface of absorber 4. In order to avoid dead volumes of the liquid, the passages 6 and 14 are provided at the top and close to the bottom of the cavity 5.

Valves 7 and 15 are provided in the top and bottom passages 6 and 14 respectively. Valves 7 and 15 are controlled by the temperature of liquid entering the valve. Valve 7 is opened when the temperature of liquid is below the required level, e.g. 24°C for home wall. The said temperature level can be individually obtained and depends on indoor requirements and properties of the solar wall.

Valve 15 is closed when the temperature of liquid is less than the lowest temperature acceptable in the massive wall, e.g. 17°C. Valve 15 closes the connection of massive wall section 10 with the cavity 5 and avoids the back flow of the liquid down the cavity 5 during the night. The construction of the valve does not bottleneck the cross-section of the passages.

Passages 6 and 14 traverse the secondary opaque insulation 8 placed between the cavity 5 and massive wall 10. The thickness and insulating properties of insulation 8 are not restricted; for example, it could be made of plastic, or mineral wool, ceramics etc. but the system comprising elements 2,3,4,5 and 8 has a U-value much less than 1,0 W/m2 K, and advantageously 0.4 W/m2 K. Massive wall section 10 is in form of a vessel with tight external cover 12 full of the liquid which circulates through the cavity 5 and through passages 6 and 14.

Massive wall section 10 has a volume appropriate to store the required amount of heat. The recommended volume of liquid calculated per 1 dm2 of the surface of absorber 4 is from 2,0 to 3,0 dm3 of liquid. Warm liquid supplied to massive wall section via passage 6 is cooled down by transferring heat to the indoor air 13; however the excess of heat is kept by the warm liquid stored inside the massive wall section 10.

Heat stored inside massive wall 10 has only a slight opportunity to escape to the outside atmosphere by passing the insulations 8 and 3 respectively.

As shown in Fig 4a, to improve the long term storing properties of massive wall section 10 it is advantageous to install in the central part of massive wall 10 a sponge structure, for example made of plastic 16 filled with the circulating liquid. The sponge structure 16 inside of massive wall cover 12 is shown in Fig. 4a. Two rows of vertical free passages 17 are provided for free flow of liquid from the top part of massive wall section 10 to the bottom part of massive wall section 10 both filled with liquid. Sponge structure 16 prevents the rapid outflow of accumulated heat to the indoor air 13. Heat from the sponge structure 16 is conducted to the surface of the inside wall 18 while the convection of liquid within the sponge filling part of massive wall 10 is limited due to the properties of the sponge structure. Hence, the convective heat flow to the outdoor air is relatively small comparing to the massive wall section with liquid inside, but without any plastics sponge structure.

Sponge structure 16 of the inside of massive wall can be made of any material with the geometry providing the opened cells or opened capillaries which are full of liquid during the operation of the wall.

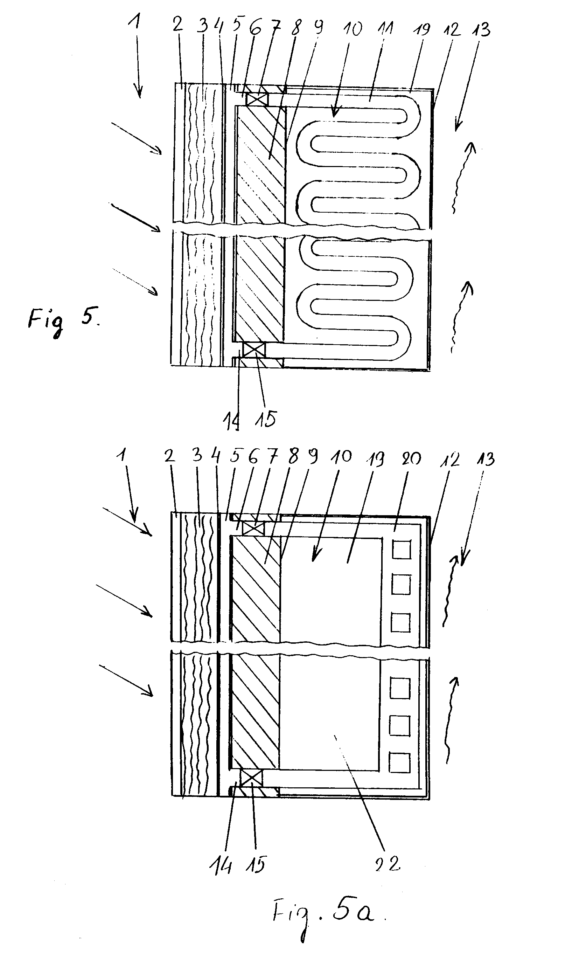

Another example of the solar wall according to the present invention is shown in Fig. 5. External transparent plate 2, is in contact with primary translucent thermal insulation 3, solar radiation absorber 4 being one wall or cavity 5 for circulating liquid and secondary insulation 8. Passages 6 and 14 pass through the layer of insulation 8 and enter the massive wall 10. Liquid temperature controlled valves 7 and 15 are provided in passages 6 and 14 respectively.

Pipes 11 for liquid are arranged inside of massive wall 10. The pipes 11 are connected with passage 6 at the top of the massive wall and with passage 14 at the bottom of it. Pipes 11 are arranged in a manner to keep the required mechanical strenght of the massive wall 10 due to the building material 19 which fills the volume of the wall around pipes 11. Pipes 11 are arranged in a way which helps to distribute the warm liquid taken from passage 6 over the whole cross section of the massive wall 10. The pipes 11 furnish warm liquid to the indoor part of massive wall 10, hence the heat of radiation is transferred from absorber 4 directly to the neighbourhood of indoor air 13.

Pipes 11 in massive wall 10 are in form of horizontal collectors as well as passages for down flow of liquid. To intensify the heat exchange between the liquid in pipes 11 and construction material of the massive wall 10 the pipes are advantageously tortuous with external baffles to extend the heat transfer surface. The piping 11 has to be made of high thermal conductivity material or in case of plastic of thin wall pipes. Pipes for liquid flow can be arranged to fit any requirements concerning the part of massive wall 10 to which the accumulated heat is primarily furnished with the stream of circulating liquid.

Since the liquid positively influences the heat storing capacity of the volume of the solar wall, the volume of concrete or/and ceramic construction 19 of massive wall section 10 is limited to the necessary level. This part of massive wall section 10 is preferably made of steel reinforced concrete based mixtures. In Fig. 5a and 5b there are presented two types of massive walls 10 with liquid passages. In the massive wall of Fig. 5a, the liquid passes through the piping 20 positioned close to the surface 18 of the massive wall 10. Hence, heat passes to the indoor air 13 and to the other part of massive wall sections 10 which is made of concrete reinforced by steel.

System shown in Fig. 5a is particularly advantageous for immediate heating of indoor air 13 while another system shown in Fig. 5b is preferred for heating the whole mass of the massive wall 10 with heat release long time after the accumulation period. Passages 20 for liquid are there placed in the middle part of the massive wall section 10 while the outside parts are of other construction materials like bricks 21 and/or concrete 22.

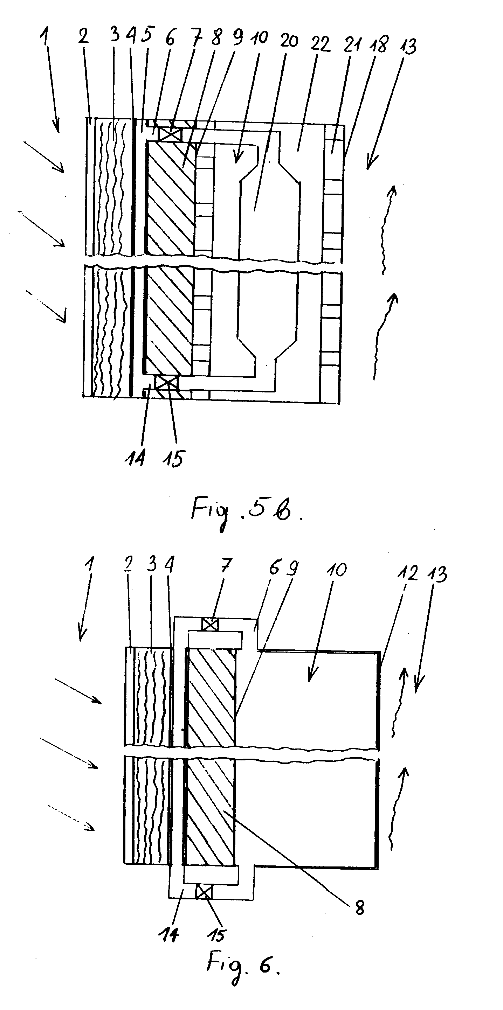

Liquid used in the solar wall according to the present invention is a very important part of the solar wall. This liquid is of high heat capacity, low freezing temperature and low viscosity. The best results for these purposes are attained by a water solution of magnesium chloride ($MgCl_2$) which shows low freezing temperatures for relatively week solutions. For the freezing temperature of minus 10°C, its concentration is 11,3% weight, while for a freezing temperature of minus 20°C, the concentration of $MgCl_2$ in water is 17,4% weight. Solutions of magnesium chloride in water have a heat capacity higher than 3500 KJ/dm3 and provide excellent heat storing properties. Solutions of magnesium chloride are used for massive wall sections with passages for liquid as in Fig. 5, Fig. 5a, Fig. 5b and Fig. 6 as well as for massive walls full of liquid as shown in Fig. 4, Fig. 4a.

The embodiment of Fig. 6 is a construction of a solar wall similar that those of Figs 4, 4a, 5, 5a and 5b except that passage means 6 and 14 connect the intermediate cavity 5 and massive wall section 10 exteriorly and without passing through the second insulation layer. Although fluid flow between the intermediate cavity 5 and massive wall section 10 is effected by natural convection of the fluid, a pump means can be connected to one of the passage 6 and 14 in case the temperature requirements would necessitate an acceleration of the fluid flow and heat transfer to the massive wall section 10.

The solar walls being the subject of the present invention are provided in a form of one piece element or in form of few separated pieces of construction joined together to form a wall of any building. For the last case, separate pieces solar walls are sticked together using any available fouling or/and insulation materials as well as steel or plastic construction into which the pieces of solar wall are built in and fastened to it.

While this invention has been explained with reference to various embodiments thereof, it is not confined to the details set forth and this application is intended to cover any modifications and changes which may be made. For example, although the invention has been described in detail with reference to an external wall section comprising an external plate and an insulation layer, it should be understood however, that the invention can also be applied to an external wall section merely made of a transparent plaster or cast which permits transmission of solar radiations and which can be coated on the absorber. Alternately, the external wall section can comprise an plurality of plates and/or layers made of different materials according to specific requirements.

## Claims

1. Wall for radiation absorption comprising
   - an external wall section comprising a first insulation layer (3) and permitting transmission of solar radiations,
   - an absorber element (4) disposed behind said first insulation layer (3), and
   - a massive wall section (10) arranged at a distance from said absorber element (4), characterized in further comprising

- a second insulation layer (8) disposed between said massive wall section (10) and said absorber element (4) such that an intermediate cavity (5) is provided between said second insulation layer (8) and said absorber element (4),
- a heat transporting fluid for transferring heat to said massive wall section (10), said heat transporting fluid passing through said intermediate cavity (5) and through said massive wall section (10),
- and passage means (6,14) permitting fluid communication between said intermediate cavity (5) and said massive wall section (10).

2. Wall according to claim 1, characterized in further comprising flow control means (7,15) for controlling the flow of fluid passing through said intermediate cavity (5) and through said massive wall section (10)

3. Wall according to claim 2, characterized in that said flow control means (7,15) includes a valve (7) in said passage means (6,14), said valve restricting or stopping the flow when the temperature of the fluid in the upper part of the cavity (5) exceeds the required level.

4. Wall according to claim 2 or claim 3, characterized in that said flow control means (7,15) includes a valve (15) in said passage means (6,14), said valve restricting or stopping the flow when the temperature of the fluid in the bottom part of the cavity (5) is below the required level.

5. Wall according to any of claims 2 to 4, characterized in that said flow control means (7,15) are controlled by the temperature of the circulating fluid.

6. Wall according to any of claims 1 to 5, characterized in that said passage means include passages (6,14) through said second insulation layer (8).

7. Wall according to any of claims 1 to 6, characterized in that said massive wall section (10) is a vessel (10) filled up with said fluid.

8. Wall according to any of claims 1 to 6, characterized in that said massive wall section (10) includes channels (11;20) connected to said passage means (6,14) for fluid flow through said massive wall section (10), said massive wall section (10) further including an assembly (19) made of concrete (22), ceramic materials (21) or any other appropriate construction material.

9. Wall according to any of claims 1 to 7, characterized in that said massive wall section includes a sponge structure (16) and channels (17) for fluid flow from the upper part to the bottom part of the massive wall section (10).

10. Wall according to any of claims 1 to 9, characterized in that said passage means (6,14) are connected to said cavity (5) at the top and bottom part of the cavity (5), respectively.

11. Wall according to any of claims 1 to 10, characterized in that the second insulation layer (8) is sticked to the outside surface (9) of the massive wall section (10),

12. Wall according to any of claims 1 to 11, characterized in that said absorber (4) is made of metal or other heat conductive material.

13. Wall according to any of claims 1 to 12, characterized in that said circulating fluid is a liquid containing more than 70% of water mixed with any antifreezing or/and anticorrosive agents.

14. Wall according to any of claims 1 to 13, characterized in that said fluid is a mixture of water and magnesium chloride.

15. Wall according to any of claims 1 to 14, characterized in that said external wall section (2,3) comprises an external plate (2) in front of said first insulation layer (3).

16. Wall according to claim 15, characterized in that said external plate (2) is transparent and said first layer (3) is a transparent or translucent insulation layer (3).

17. Wall according to any of claims 1 to 14, characterized in that said external wall section is a plaster material providing said first insulation layer and allowing transmission of solar radiations.

18. A method for absorbing solar radiation and transferring thermal energy in a solar wall comprising an external wall section (2,3) comprising a first insulation layer (3) and allowing transmission of solar radiations; an absorber element (4) behind the first insulation layer (3); and a massive wall section (10) spaced from the absorber element (4) by an intermediate cavity (5), characterized in that

said method comprises the steps of

- insulating the massive wall section (10) from the intermediate cavity (5) by a second insulation layer (8),
- permitting fluid communication between the intermediate cavity (5) and the massive wall section (10), and
- passing a heat transporting fluid through the intermediate cavity (5) and through the massive wall section (10) to transfer heat from the cavity (5) to the massive wall section (10).

19. The method according to claim 18, characterized by comprising the step of controlling the flow of fluid passing through the cavity (5) and through the massive wall section.

20. The method according to claim 19, characterized by limiting or stopping the flow of fluid by flow control means (7,15) operated according to the temperature of the fluid.

21. The method according to any of claims 18 to 20, characterized by effecting fluid circulation from the cavity (5) to the massive wall section (10) by using natural convection of the fluid.

EP 0 473 859 A1

Fig. 1

Fig. 2

Fig. 3

9

Fig. 4.

Fig. 4a.

Fig 5.

Fig. 5a.

Fig. 5 6.

Fig. 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 294 229 (MALONEY)<br>* Column 2, line 58 - column 3, line 12; column 3, line 59 - column 4, line 42; figures 1,2,4 * | 1,2,6,7, 10,12,15, 16,18,19, 21 | F 24 J 2/04<br>F 24 J 2/34<br>F 24 J 2/40 |
| X | US-A-4 350 145 (BIANCHINI)<br>* Column 3, line 18 - column 5, line 35; figures 1,2 * | 1,2,6,7, 10,12,13, 15,16,18, 19,21 | |
| X | US-A-4 192 290 (JENSEN)<br>* Column 2, line 47 - column 3, line 15; figures 1,2 * | 1,6,7,10, 15,16,18, 21 | |
| X | FR-A-2 575 811 (TOTAL ENERGIE DEVELOPMENT)<br>* Page 5, line 7 - page 6, line 36; figures 1,2 * | 1,2,6,7, 10,12,15, 16,18,19, 21 | |
| Y | | 3-5,20 | |
| Y | US-A-4 137 964 (BUCKLEY)<br>* Column 10, line 65 - column 11, line 13; figure 18 * | 3-5,20 | **TECHNICAL FIELDS SEARCHED (Int. Cl.5)**<br><br>F 24 J |

The present search report has been drawn up for all claims

| Place of search | Date of completion of search | Examiner |
|---|---|---|
| The Hague | 08 March 91 | BELTZUNG F.C. |

CATEGORY OF CITED DOCUMENTS

X : particularly relevant if taken alone
Y : particularly relevant if combined with another
　　document of the same catagory
A : technological background
O : non-written disclosure
P : intermediate document
T : theory or principle underlying the invention

E : earlier patent document, but published on, or after
　　the filing date
D : document cited in the application
L : document cited for other reasons

&: member of the same patent family, corresponding
　　document